Europäisches Patentamt

(19) European Patent Office

Office européen des brevets

(11) Numéro de publication: **0 266 244 B1**

(12) **FASCICULE DE BREVET EUROPEEN**

(45) Date de publication de fascicule du brevet:
13.11.91

(51) Int. Cl.⁵: **G02B 3/04**

(21) Numéro de dépôt: 87402174.4

(22) Date de dépôt: 30.09.87

(54) **Lentille stigmatique à plusieurs longueurs d'onde.**

(30) Priorité: 01.10.86 FR 8613689

(43) Date de publication de la demande:
04.05.88 Bulletin 88/18

(45) Mention de la délivrance du brevet:
13.11.91 Bulletin 91/46

(84) Etats contractants désignés:
DE GB

(56) Documents cités:
DE-A- 2 846 918

APPLIED OPTICS, vol. 22, no. 20, 15 octobre 1983, pages 3242-3248, Optical Society of America; G. SCHULZ et al.: "Achromatic and sharp real imaging of a point by a single aspheric lens"

PATENT ABSTRACTS OF JAPAN, vol. 9, no. 320 (P-413)[2043], 14 décembre 1985, page 56 P 413; & JP-A-60 146 213

(73) Titulaire: R.E.O.S.C. (RECHERCHES ET ETUDES D'OPTIQUE ET DE SCIENCES CONNEXES)
10, rue des Ecoles
Ballainvilliers F-91160 Longjumeau(FR)

(72) Inventeur: Geyl, Roland
5, rue Henri Thirard
F-94240 L'Hay Les Roses(FR)
Inventeur: Ruch, Eric
2, rue du Béarn
F-94150 Chevilly Larue(FR)

(74) Mandataire: Schrimpf, Robert et al
Cabinet Regimbeau 26, Avenue Kléber
F-75116 Paris(FR)

## Description

La présente invention concerne le domaine des lentilles optiques.

La Demanderesse a posé le problème de concevoir une lentille stigmatique à au moins deux longueurs d'ondes différentes. Une telle lentille peut notamment trouver application dans le traitement de faisceaux lasers englobant plusieurs longueurs d'ondes différentes, le plus souvent sous forme d'harmoniques.

On a décrit dans le document Applied Optics vol. 22, N. 20, 15 octobre 1983 (Achromatic and sharp real imaging of a point by a single aspheric lens) une lentille simple aplanétique à deux longueurs d'onde. Cependant, la lentille décrite dans ce document a pour but d'obtenir une image stigmatique pour deux longueurs d'onde différentes dans le même plan focal. Elle vise donc la correction du chromatisme longitudinal. La forme géométrique de sa surface optique est déterminée de façon discrète, de proche en proche, sur un certain nombre de points sur une méridienne.

Le document DE-A-2846916 n'a pas de rapport direct avec l'objet de la présente demande de brevet. Il présente, sous une forme très générale, l'équation d'une méridienne de surface optique, en introduisant dans celle-ci des termes non conventionnels : 1) un terme qui varie linéairement avec la hauteur d'incidence h sur la surface (Une telle surface présente un point de rebroussement sur l'axe et est semblable à celle citée dans l'article mentionné ci dessus), 2) des termes d'ordre impair en h ($h3$, $h5$, etc...), 3) des termes dont la puissance en h est rationnelle, etc ... A partir de là, l'auteur envisage la correction de certaines aberrations d'un nouveau type (aberration sphérique d'ordre inférieur à 3, coma d'ordre inférieur à 3, ...) et l'amélioration de systèmes optiques existants par l'introduction de surfaces à méridienne nouvelle. Il n'est fait, dans le texte de ce document ni mention de correction d'aberration chromatique, ni mention de lentille simple stigmatique à deux longueurs d'onde.

La présente invention a par contre pour but de définir une lentille stigmatique à au moins deux longueurs d'onde différentes, avec correction de la variation chromatique des aberrations, quitte à tolérer un chromatisme longitudinal important.

Un autre but de la présente invention est de définir une lentille stigmatique à au moins deux longueurs d'onde différentes formée de surfaces optiques coniques de révolution.

Après de longues recherches qui seront explicitées par la suite, la Demanderesse a défini une lentille résolvant le problème ainsi posé ; cette lentille est asphérisée sur une seule face possédant un rayon de courbure $R_1$ et un coefficient d'asphérisation $\epsilon$ répondant aux définitions suivantes :

(3) $R_1 = [A + BN_0 + (L + M(N_0 - 3))(N_0 - 1,5)^2 + C((N_1 - N_0)-0,02)] f + D$ et

(4) $\epsilon = [I + J N_0 + (N_0-1,5)^2(P + Q(N_0 - 3) + O(N_0-3)(N_0 - 4)) + K(N_1 - N_0 - 0,02)] + 1,8. 10^{-6} f$

dans lesquelles :

. $N_0$ représente l'indice de la lentille à une première longueur d'onde $\lambda_0$, pour laquelle on veut assurer le stigmatisme,

. $N_1$ représente l'indice de la lentille à une seconde longueur d'onde $\lambda_1$ pour laquelle on veut également assurer le stigmatisme,

. f représente la focale en mm de la lentille à la longueur d'onde $\lambda_0$ et

. A, B, C, D, I, J, K, L, M, O, P et Q sont des constantes définies comme suit :

A = - 0,3387 ± 0,02
B = 0,54026 ± 0,03
C = - 0,1615 ± 0,01
D = 0,3444 ± 0,02 mm
I = - 1,4708 ± 0,08
J = 0,61921 ± 0,03
K = 0,1955 ± 0,01
L = - 0,1968 ± 0,01
M = 0,1253 ± 0,007
P = - 0,2356 ± 0,01
Q = 0,0608 ± 0,003
O = - 0,015 ± 0,0008,

le coefficient $1,8.10^{-6}$ étant exprimé en $mm^{-1}$.

Selon une autre caractéristique préférentielle de la présente invention, la lentille résolvant le problème précité est plus précisément encore du type asphérique sur une face possédant un rayon de courbure $R_1$ et un coefficient d'asphérisation $\epsilon$ répondant aux définitions suivantes :

(1) $R_1 = [A + BN_0 + C ((N_1-N_0)-0,02)] f + D$ et

(2) $\epsilon = [I + JN_0 + K ((N_1-N_0)-0,02)] + 1,8.10^{-6}f$

dans lesquelles :

. $N_0$ représente l'indice de la lentille à une première longueur d'onde nominale $\lambda_0$, pour laquelle on veut assurer le stigmatisme,

. $N_1$ représente l'indice de la lentille à une seconde longueur d'onde $\lambda_1$, pour laquelle on veut également assurer le stigmatisme,

. f représente la focale en mm de la lentille à la longueur d'onde $\lambda_0$ et

. A, B, C, D, I, J, K sont des constantes définies comme suit :

$A \quad = - 0,3387 \pm 0,02$

$B \quad = 0,54026 \pm 0,03$

$C \quad = - 0,1615 \pm 0,01$

$D \quad = 0,3444 \pm 0,02$ mm

$I \quad = - 1,4708 \pm 0,08$

$J \quad = 0,61921 \pm 0,03$

$K \quad = 0,1955 \pm 0,01,$

le coefficient $1,8.10^{-6}$ étant exprimé en $mm^{-1}$

On va maintenant expliciter la recherche de la Demanderesse qui a conduit à cette définition de la lentille.

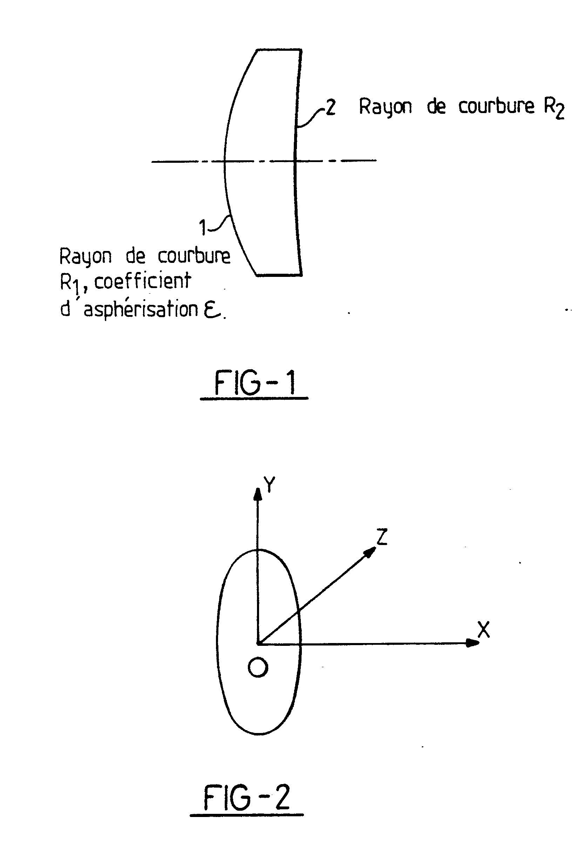

Cette dernière est illustrée schématiquement sur la figure 1 annexée. Sur cette figure 1, on distingue une première face 1 asphérique, tournée du côté du point objet, qui possède un rayon de courbure $R_1$ et un coefficient d'asphérisation $\epsilon$, ainsi qu'une seconde face 2 sphérique, l'épaisseur au centre de la lentille étant E.

La première démarche de la Demanderesse pour définir une lentille stigmatique à au moins deux longueurs d'onde a consisté en l'étude de l'existence d'une solution, dans le cadre de l'approximation du 3ème ordre.

Considérons une lentille de puissance $\Phi$, de cambrure $\gamma$, d'indice n à la longueur d'onde principale soient $R_1$ et $R_2$, les rayons de courbure des deux faces et $\epsilon$ le coefficient d'asphérisation de la première face.

La correction du stigmatisme dans le domaine d'approximation du 3ème ordre se traduit par l'équation suivante :

$$S\gamma^2 - 2T\gamma + U + \frac{n-1}{R_1^3} \epsilon = 0 \qquad (5)$$

avec

$$S = \frac{n+2}{n} \Phi \qquad (6)$$

$$T = \frac{2n+2}{n} \frac{\Phi^2}{2} \qquad (7)$$

$$U = \frac{3n+2}{n} \frac{\Phi^3}{4} + \left(\frac{n}{n(n-1)}\right)^2 \Phi^3 \qquad (8)$$

Cette équation (5) du second degré admet en général deux solutions en $\gamma$ ($\epsilon$ étant fixé a priori) qui conduisent à deux types de lentilles satisfaisant au problème. Il est donc possible d'ajouter une équation supplémentaire pour avoir une solution simultanée aux deux équations.

En particulier, si on veut assurer le stigmatisme aux deux longueurs d'onde $\lambda_0$ et $\lambda_1$ auxquelles correspondent les indices $N_0$ et $N_1$ de la lentille, il faut satisfaire aux deux équations :

EP 0 266 244 B1

$$\begin{cases} S_1 \gamma^2 - 2T_1 \gamma + U_1 + \dfrac{N_O - 1}{R_1^{\,3}}\, \varepsilon = 0 & (9) \\[4mm] S_2 \gamma^2 - 2T_2 \gamma + U_2 + \dfrac{N_1 - 1}{R_1^{\,3}}\, \varepsilon = 0 & (10) \end{cases}$$

En prenant $\varepsilon$ dans la première équation, et en le remplaçant par son expression dans la seconde, on obtient l'équation ne contenant plus que l'inconnue $\gamma$ :

$$(11)\quad \left(\frac{S_1}{N_O - 1} - \frac{S_2}{N_1 - 1}\right)\gamma^2 - 2\left(\frac{T_1}{N_O - 1} - \frac{T_2}{N_1 - 1}\right)\gamma + \frac{U_1}{N_O - 1} - \frac{U_2}{N_1 - 1} = 0$$

l'équation (11) admet en général deux solutions : on ne retient que celle dite "aux faibles cambrures", où $\gamma$ est minimum, car on sait, a priori, que cette combinaison présente moins d'aberrations d'ordre supérieur que l'autre solution.

Connaissant $\gamma$, le coefficient d'asphérisation $\varepsilon$ se calcule par la formule suivante :

$$\varepsilon = -\frac{S_1 \gamma^2 - 2T_1 \gamma + U_1}{(N_O - 1)\gamma + \dfrac{\Phi}{2}}\qquad (12)$$

La Demanderesse a ainsi déterminé une solution analytique mais approchée du problème.

Elle a ensuite procédé à une optimisation de la solution précédente, afin d'intégrer les aberrations d'ordre supérieur dans l'analyse de la lentille, et de pouvoir obtenir la meilleure solution possible.

Les données nécessaires à cette optimisation sont :
- la focale f ou la puissance $\Phi$ de la lentille ;
- les rayons de courbure $R_1$ et $R_2$ ainsi que le coefficient d'asphérisation $\varepsilon$ ;
- l'épaisseur E de la lentille, dont l'influence sur les aberrations est faible, est fixée a priori avec comme seuls critères des contraintes mécaniques d'épaisseur au centre et au bord de la lentille ;
- l'ouverture numérique F de la lentille ;
- le matériau constituant la lentille ;
- les longueurs d'onde auxquelles il faut assurer le stigmatisme.

Il ressort du processus d'optimisation ainsi mené que :
- le domaine de correction peut s'étendre à des lentilles ouvertes jusqu'à F/2 voire F/1.5, les résidus d'aberrations restant dans l'ordre de grandeur de la tache de diffraction ;
- la correction ne s'applique pas uniquement aux deux longueurs d'onde ayant servi à l'optimisation mais à l'ensemble de domaine spectral compris entre celles-ci, ce domaine pouvant être relativement large.
- la différence entre la solution obtenue dans le 3ème ordre et la solution optimisée devient significative pour des ouvertures de F/2 ou plus.

Cette dernière constatation a amené la Demanderesse à établir une formulation de R et $\varepsilon$ permettant d'englober l'ensemble des combinaisons optimisées quelles que soient leurs ouvertures, $R_2$ étant calculé à partir de $R_1$ et E pour obtenir la focale désirée. La Demanderesse a pour cela fait varier l'ensemble des paramètres intervenant dans la détermination de $R_1$ et $\varepsilon$.

A partir d'une combinaison type (lentille en BK7, objet à l'infini, indices $N_0 = 1{,}51$, $N_1 = 1{,}53$), elle a cherché les solutions optimisées pour différentes focales f.

On constate que $\varepsilon$ varie quelque peu en fonction de la focale. Un coefficient de correction de $1{,}8.10^{-6}$ $mm^{-1}$ apparaît nécessaire.

Aux paramètres $N_0$ et $N_1$, on peut substituer les variables $N_0$ et $\Delta N = N_1 - N_0$.

Dans un domaine spectral visuel, allant jusqu'à 1 $\mu$m environ, $R_1$ et $\epsilon$ peuvent parfaitement s'approximer par une fonction linéaire de $\Delta N$ avec des erreurs inférieures à 0,2 %.

Dans le domaine visible, $R_1$ et $\epsilon$ sont également des fonctions linéaires de $N_0$.

Sur ces bases, on peut établir les formules donnant $R_1$ et $\epsilon$ en fonction de f, $N_0$ et $\Delta N$, valables dans ce domaine spectral :

(1) $R_1 = (-0,3387 + 0,54026\ N_0 - 0,1615(\Delta N - 0,02))f + 0,3444$

(2) $\epsilon = (-1,4708 + 0,6192\ N_0 + 0,1955(\Delta N - 0,02)) + 1,8.10^{-6}f$

La Demanderesse a de plus déterminé que ce type de lentille présente également un intérêt non négligeable dans le domaine infra-rouge jusqu'à des longueurs d'onde de 10 $\mu$m avec des lentilles en germanium.

Les paramètres précédents f, $N_0$ et $\Delta N$ ont alors à nouveau été étudiés systématiquement afin d'obtenir les expressions de $R_1$ et $\epsilon$.

Pour cela, il a été nécessaire d'introduire une dépendance plus complexe en $N_0$ et $N_1$ pour couvrir un domaine d'indice allant de 1,4 à 4 et un domaine de variation d'indice $|\Delta N| \leqq 0,10$.

Cette étude a conduit à la définition des relations (3) et (4) précitées.

Les paramètres $R_1$ et $\epsilon$ de la lentille (rayon de courbure et coefficient d'asphérisation de la première face) étant définis par ces relations (3) et (4) et l'épaisseur E au centre étant fixée a priori, le rayon de courbure $R_2$ de la seconde face peut aisément être calculé pour obtenir la focale désirée.

Exemple de réalisation

La Demanderesse a réalisé un exemple de lentille répondant aux caractéristiques suivantes :

$R_1$ = 48,819

$\epsilon$ = - 0,53389

E = 6,0

$R_2$ = 895,628

Verre = BK7.

Cette lentille de focale f = 100 mm ouverte à f/2 à $\lambda$ = 0,6328 $\mu$m est stigmatique aux trois longueurs d'onde suivantes :

0,35 $\mu$m, 0,6328 $\mu$m et 1,06 $\mu$m.

Le tirage est respectivement pour ces trois longueurs d'onde : 91,4 mm, 95,8 mm et 97,5 mm.

On rappelle pour la bonne compréhension de la présente invention que l'on définit le coefficient d'asphérisation par la relation suivante :

$$(13) \qquad X = \frac{(Y^2 + Z^2)/R}{1 + \sqrt{1 - (1 + \epsilon)\left(\frac{X^2 + Y^2}{R^2}\right)}}$$

pour un dioptre de révolution autour de l'axe OX, comme illustré sur la figure 2 annexée, R étant le rayon de courbure au sommet O, et X représentant la flèche de la surface asphérique mesurée par rapport au sommet du dioptre.

**Revendications**

1. Lentille optique stigmatique à plusieurs longueurs d'onde différentes correspondant à des foyers distincts caractérisée par le fait qu'elle est du type asphérisé sur une seule face, possédant un rayon de courbure $R_1$ et un coefficient d'asphérisation $\epsilon$ répondant aux définitions suivantes:

(3) $R_1 = [A + BN_0 + (L + M(N_0 - 3))(N_0 - 1,5)^2 + C((N_1 - N_0) - 0,02)]\ f + D$ et

(4) $\epsilon = [I + J\ N_0 + (N_0 - 1,5)^2(P + Q(N_0 - 3) + O(N_0 - 3)(N_0 - 4) + K(N_1 - N_0 - 0,02)] + 1,8.\ 10^{-6}\ f$

dans lesquelles :

. $N_0$ représente l'indice de la lentille à une première longueur d'onde nominale $\lambda_0$, pour laquelle on veut assurer le stigmatisme,

. $N_1$ représente l'indice de la lentille à une seconde longueur d'onde $\lambda_1$ pour laquelle on veut également assurer le stigmatisme,

. f représente la focale en mm de la lentille à la longueur d'onde $\lambda_0$

. A, B, C, D, I, J, K, L, M, O, P et Q sont des constantes définies comme suit :

| | |
|---|---|
| A | $= -0{,}3387 \pm 0{,}02$ |
| B | $= 0{,}54026 \pm 0{,}03$ |
| C | $= -0{,}1615 \pm 0{,}01$ |
| D | $= 0{,}3444 \pm 0{,}02$ mm |
| I | $= -1{,}4708 \pm 0{,}08$ |
| J | $= 0{,}61921 \pm 0{,}03$ |
| K | $= 0{,}1955 \pm 0{,}01$ |
| L | $= -0{,}1968 \pm 0{,}01$ |
| M | $= 0{,}1253 \pm 0{,}007$ |
| P | $= -0{,}2356 \pm 0{,}01$ |
| Q | $= 0{,}0608 \pm 0{,}003$ |
| O | $= -0{,}015 \pm 0{,}0008,$ |

le coefficient $1{,}8{.}10^{-6}$ étant exprimé en $\text{mm}^{-1}$.,

. Le coefficient d'asphérisation $\epsilon$ répond à la relation suivante :

$$(13) \quad X = \frac{(Y^2 + Z^2)/R}{1 + \sqrt{1 - (1 + \epsilon)\left(\dfrac{X^2 + Y^2}{R^2}\right)}}$$

pour un dioptre de révolution autour d'un axe OX, R étant le rayon de courbure au sommet O, et X représentant la flèche de la surface asphérique mesurée par rapport au sommet du dioptre.

2. Lentille optique stigmatique à plusieurs longueurs d'onde différentes, correspondant à des foyers distincts, caractérisée par le fait que la lentille est du type asphérique sur une seule face, possédant un rayon de courbure $R_1$ et un coefficient d'asphérisation $\epsilon$ répondant aux définitions suivantes :

(1) $R_1 = [A + BN_0 + C((N_1-N_0)-0{,}02)] f + D$ et
(2) $\epsilon = [I + JN_0 + K((N_1-N_0)-0{,}02)] + 1{,}8{.}10^{-6}f$

dans lesquelles :

. $N_0$ représente l'indice de la lentille à une première longueur d'onde nominale $\lambda_0$, pour laquelle on veut assurer le stigmatisme,

. $N_1$ représente l'indice de la lentille à une seconde longueur d'onde $\lambda_1$, par laquelle on veut également assurer le stigmatisme,

. f représente la focale en mm de la lentille à la longueur d'onde $\lambda_0$,

. A, B, C, D, I, J, K sont des constantes définies comme suit :

| | |
|---|---|
| A | $= -0{,}3387 \pm 0{,}02$ |
| B | $= 0{,}54026 \pm 0{,}03$ |
| C | $= -0{,}1615 \pm 0{,}01$ |
| D | $= 0{,}3444 \pm 0{,}02$ mm |
| I | $= -1{,}4708 \pm 0{,}08$ |
| J | $= 0{,}61921 \pm 0{,}03$ |
| K | $= 0{,}1955 \pm 0{,}01,$ et |

le coefficient $1{,}8{.}10^{-6}$ est exprimé en $\text{mm}^{-1}$.

## Claims

1. Optical lens sigmatic at multiple wavelengths corresponding to separate focal points, characterised by the fact that the lens is of the type aspheric on one side only having a radius of curvature $R_1$ and an aspheric coefficient $\epsilon$ meeting the following definitions :

(3) $R_1 = [A + BN_0 + (L + M(N_0 - 3))(N_0 - 1.5)^2 + C((N_1 - N_0) - 0.02)] f + d$ and

(4) $\epsilon = [I + J N_0 + (N_0 - 1.5)^2 (p + Q(N_0 - 3) + O(N_0 - 3)(N_0 - 4)) + K(N_1 - N_0 - 0.02)] + 1.8 \cdot 10^{-6} f$

in which :
- $N_0$ represents the index of the lens at a first nominal wavelength $\lambda_0$ at which stigmatism is to be achieved,
- $N_1$ represents the index of the lens at a second wavelength $\lambda_1$ at which stigmatism is also to be achieved,
- $f$ represents in mm the focal length of the lens at the wavelength $\lambda_0$, . A, B, C, D, I, J, K, L, M, O, P and Q are constants defined as follows :

    A     $= -0.3387 \pm 0.02$
    B     $= 0.54026 \pm 0.03$
    C     $= -0.1615 \pm 0.01$
    D     $= 0.3444 \pm 0.02$ mm
    I     $= -1.4708 \pm 0.08$
    J     $= 0.61921 \pm 0.03$
    K     $= 0.1955 \pm 0.01$
    L     $= -0.1968 \pm 0.01$
    M     $= 0.1253 \pm 0.007$
    P     $= -0.2356 \pm 0.01$
    Q     $= 0.0608 \pm 0.003$
    O     $= -0.015 \pm 0.0008$

    the coefficient $1.8 \cdot 10^{-6}$ being defined in $mm^{-1}$,
- the aspheric coefficient $\epsilon$ is defined by the following equation :

$$(13) \quad X = \frac{(Y^2 + Z^2) / R}{1 + \sqrt{1 - (1 + \varepsilon)\left(\dfrac{X^2 + Y^2}{R^2}\right)}}$$

for a dioptric element which is a surface of revolution about the axis OX, R being the radius of curvature of the apex O, and X representing the curvature of the aspheric surface as measured relative to the apex of the dioptric element.

2. Optical lens stigmatic at multiple wavelengths corresponding to separate focal points, characterized by the fact that the lens is aspheric on one side only having a radius of curvature $R_1$ and an aspheric coefficient $\epsilon$ meeting the following conditions :

(1) $R_1 = [A + BN_0 + c ((N_1 - N_0) - 0.02)] f + D$ and
(2) $\epsilon = [I + JN_0 + x ((N_1 - N_0) - 0.02)] + 1.8 \cdot 10^{-6} f$

in which :
- $N_0$ represents the index of the lens at a first nominal wavelength $\lambda_0$ at which stigmatism is to be achieved,
- $N_1$ represents the index of the lens at a second wavelength $\lambda_1$ at which stigmatism is also to be achieved,
- $f$ represents in mm the focal length of the lens at the wavelength $\lambda_0$, and
- A, B, C, D, I, J and K are constants defined as follows:

    A     $= -0.3387 \pm 0.02$
    B     $= 0.54026 \pm 0.03$
    C     $= -0.1615 + 0.01$
    D     $= 0.3444 \pm 0.02$ mm
    I     $= -1.4708 \pm 0.08$
    J     $= 0.61921 \pm 0.03$
    K     $= 0.1955 \pm 0.01$

    the coefficient $1.8 \cdot 10^{-6}$ being defined in $mm^{-1}$.

**Patentansprüche**

1. Stigmatische optische Linse für mehrere verschiedene Wellenlängen, welche den verschiedenen Brennpunkten entsprechen, dadurch gekennzeichnet, daß sie vom Typ mit nur einer asphärischen Fläche ist, welche einen Krümmungsradius $R_1$ und einen Asphärisationskoeffizienten $\epsilon$ entsprechend den folgenden Definitionen besitzt:

(3) $R_1 = [A + BN_0 + (L + M(N_0 - 3))(N_0 - 1,5)^2 + C(N_1 - N_0)-0,02)]\ f + D$ et

(4) $\epsilon = [I + J\ N_0 + (N_0-1,5)^2(P + Q(N_0 - 3) + 0(N_0-3)(N_0 - 4)) + K(N_1 - N_0 - 0`02)] + 1,8.\ 10^{-6}\ f$

bei welchen:

- $N_0$ den Linsenindex für eine erste nominale Wellenlänge $\lambda_0$ darstellt, für die man den Stigmatismus sicherstellen will.
- $N_1$ den Linsenindex für eine zweite Wellenlänge $\lambda_1$ darstellt, für die man ebenfalls den Stigmatismus sicherstellen möchte,
- f die Brennweite der Linse in mm für die Wellenlänge $\lambda_0$ darstellt,
- A, B, C, D, I, J, K, L, M, O, P und Q Konstanten sind, die wie folgt definiert sind:

  A    = - 0,3387 ± 0,02  
  B    = 0,54026 ± 0,03  
  C    = - 0,1615 ± 0,01  
  D    = 0,3444 ± 0,02 mm  
  I     = - 1,4708 ± 0.08  
  J     = 0,61921 ± 0,03  
  K    = 0,1955 ± 0,01  
  L    = - 0,1968 ± 0,01  
  M   = 0,1253 ± 0,007  
  P    = - 0,2356 ± 0,01  
  Q    = 0,0608 ± 0,003  
  O    = - 0,015 ± 0,0008

  der Koeffizient $1,8 \times 10^{-6}$ in $mm^{-1}$ ausgedrückt ist,
- Der Asphärisationskoeffizient $\epsilon$ sich aus der folgenden Gleichung ergibt:

$$(13) \quad X = \frac{(Y^2 + Z^2)/R}{1 + \sqrt{1 - (1 + c)\left(\dfrac{X^2 + Y^2}{R^2}\right)}}$$

für ein Drehungsdiopter um eine Achse OX, wobei R der Krümmungsradius vom Scheitelpunkt O ist, und X den Pfeil der asphärischen Oberfläche darstellt, gemessen in Bezug auf den Scheitelpunkt des Diopters.

2. Stigmatische optische Linse für mehrere verschiedene Wellenlängen, welche den verschiedenen Brennweiten entsprechen, dadurch gekennzeichnet, daß die Linse vom Typ mit nur einer asphärischen Fläche ist, welche einen Krümmungsradius $R_1$ und einen Asphärisationskoeffizienten $\epsilon$ entsprechend den folgenden Definitionen besitzt:

(1) $R_1 = [A + BN_0 + C\ ((N_1-N_0)-0,02)]\ f + D$

(2) $\epsilon = [I + JN_0 + K\ ((N_1-N_0)-0,02)] + 1,8.10^{-6}f$

bei welchen:

- $N_0$ den Linsenindex für eine erste nominale Wellenlänge $\lambda_0$ darstellt, für die man den Stigmatismus sicherstellen möchte,
- $N_1$ den Linsenindex für eine zweite Wellenlänge $\lambda_1$ darstellt, für die man ebenfalls den Stigmatismus sicherstellen möchte,
- f die Brennweite der Linse in mm bei der Wellenlänge $\lambda_0$ darstellt,
- A, B, C, D, I, J, K Konstanten sind, die wie folgt definiert sind:

A  = - 0,3387 ± 0,02
B  = 0,54026 ± 0,03
C  = - 0,1615 ± 0,01
D  = 0,3444 ± 0,02 mm
I  = - 1,4708 ± 0,08
J  = 0,61921 ± 0.03
K  = 0,1955 ± 0,01

und der Koeffizient $1,8 \times 10^{-6}$ in $mm^{-1}$ ausgedrückt ist.

2 Rayon de courbure R₂

1

Rayon de courbure
R₁, coefficient
d'asphérisation ε.

FIG-1

FIG-2